# EUROPÄISCHE PATENTANMELDUNG

(11) **EP 2 353 725 A1**
(43) Veröffentlichungstag der Anmeldung: **10.08.2011**
(21) Anmeldenummer: 10000895.2
(22) Anmeldetag: 28.01.2010
(51) Int. Cl.: B05B 1/14, B05B 7/20, B05B 15/04, C23C 4/12, H05H 1/34, B05B 1/04

(54) **Spritzdüse und Verfahren zum atmosphärischen Spritzen, Vorrichtung zum Beschichten und beschichtetes Bauteil**

(71) Anmelder: SIEMENS AKTIENGESELLSCHAFT, 80333 München (DE)
(72) Erfinder: Borchardt, Andy, 13585 Berlin (DE); Felkel, Mario, 10115 Berlin (DE); Kyeck, Sacha Martin, Dr., 14197 Berlin (DE); Stambke, Martin, 06369 Kleinpaschleben (DE)

(57) **Zusammenfassung**

Durch eine Plasmaspritzdüse, die atmosphärisches Plasmaspritzen mit Schutzgas ermöglicht, ist es auch möglich, oxidationsempfindliche metallische Beschichtungen bei Atmosphäre zu schichten.

## Beschreibung

Die Erfindung betrifft ein Verfahren zum atmosphärischen Plasmaspritzen, eine Vorrichtung zum Beschichten und ein Bauteil.

Atmosphärisches Plasmaspritzen stellt eine kostengünstige Alternative des Plasmaspritzens dar, da hier auf eine Vakuumanlage verzichtet werden kann. Dies ist jedoch nicht mit jedem Pulver möglich. Bei anderen Beschichtungsverfahren werden oft bestimmte Eigenschaften der metallischen Schicht nicht erreicht.

Um dem Wirkungsgrad einer Turbine zu erhöhen, muss die Turbineneinlasstemperatur des Gases erhöht werden. Damit die Turbinenschaufeln bei diesen hohen Temperaturen von >800°C keinen Schaden nehmen, wird eine metallische Beschichtung als Oxidationsschutz und Haftvermittlerschicht (HVS) und darauf eine keramische Beschichtung zur Wärmedämmung aufgebracht. Damit die keramische Beschichtung auf der HVS hält, ist eine sehr raue Oberfläche erforderlich. Aktuell wird diese HVS meist mit Vakuumverfahren der Spritztechnologie aufgebracht, die sehr aufwändig und teuer sind. Des Weiteren fehlt ihnen die Flexibilität, auch andere Beschichtungsmaterialien als MCrAlY für HVS zu nutzen. Aus diesen Gründen wird aktuell damit begonnen, die Vakuumverfahren durch andere zu ersetzen. Eines dieser Verfahren ist das Hochgeschwindigkeitsflammspritzen (HVOF). Die geforderte raue Beschichtung mit einem HVOF Prozess zu erzeugen, ist technologisch bedingt recht schwierig. Besonders bei flachen Beschichtungswinkeln, d.h. <90° zur Oberfläche, kann keine ausreichend raue Oberfläche erzeugt werden. Eine Beschichtung mittels atmosphärischen Plasmaspritzen ist nicht möglich, da die MCrAlY Legierung unter Einwirkung des Luftsauerstoffs oxidiert.

Es ist daher Aufgabe der Erfindung oben genanntes Problem zu lösen.

Die Aufgabe wird gelöst durch eine Plasmaspritzdüse gemäß Anspruch 1, durch ein Verfahren gemäß Anspruch 7, 10, durch eine Vorrichtung gemäß Anspruch 12 und ein Bauteil gemäß Anspruch 14.

In den Unteransprüchen sind weitere vorteilhafte Maßnahmen aufgelistet, die beliebig miteinander kombiniert werden können, um weitere Vorteile zu erzielen.

Es zeigen
- Figur 1: einen Aufsatz für eine Plasmaspritzdüse,
- Figur 2, 3: verschiedene Aufsätze für die Plasmaspritzdüse,
- Figur 4: perspektivisch eine Gasturbine,
- Figur 5: perspektivisch eine Turbinenschaufel,
- Figur 6: perspektivisch eine Brennkammer,

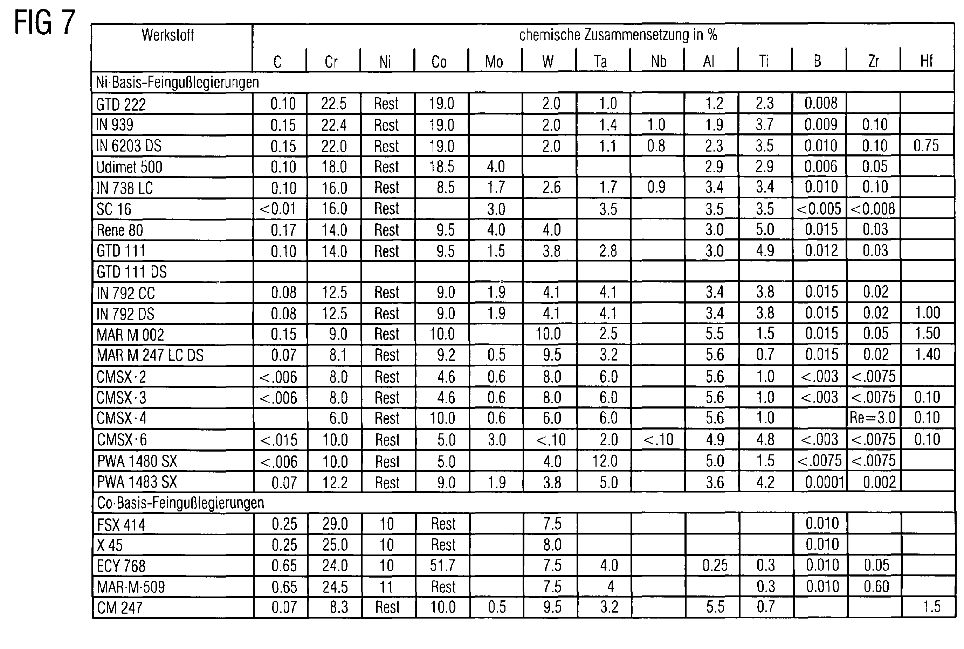

- Figur 7: eine Liste von Superlegierungen.

Die Beschreibung und die Figuren stellen nur Ausführungsbeispiele der Erfindung dar.

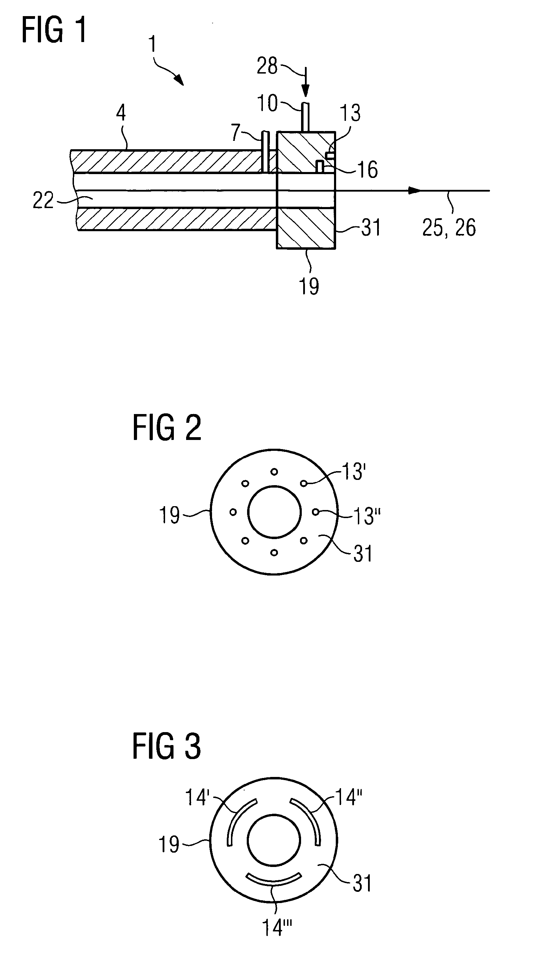

In der Figur 1 ist eine Spritzdüse 1 gezeigt.

Die Spritzdüse 1 weist eine konventionelle Düse 4 bekannt aus dem Stand der Technik zu Plasmaspritzdüsen (APS, ...) und ein Aufsatz 19 auf. Parallel zu einer Längsrichtung 26 eines Innenkanals 22 der Düse 4 strömt durch ein Plasma erwärmtes, zumindest teilweise aufgeschmolzenes Beschichtungsmaterial aus der Düse 4 in einer Ausströmrichtung 25. Das Plasma wird im Innenkanal 22 der Düse 4 erzeugt.

Die Düse 4 ist nur dahingehend modifiziert, dass an ihr ein Aufsatz 19 befestigbar ist. Der Aufsatz 19 verlängert den inneren Kanal der Düse 4. Durch Löcher 13, 13', 13" auf der Stirnfläche 31 des Aufsatzes 19, ..., die vorzugsweise düsenförmig ausgebildet sind, (s. a. Fig. 2, 3) strömt ein Schutzgas 28 aus und erzeugt eine gewünschte Geometrie eines Schutzgasmantels um das ausströmende Beschichtungsmaterial. Das Schutzgas 28 kann auch aus Schlitzen 14', 14" ausströmen, die kreisförmig angeordnet sind (Fig. 3). Zumindest zwei, insbesondere vier Schlitze 14', 14", ... sind vorzugsweise vorhanden.

Das Schutzgas 28 kann vorzugsweise Argon, Helium, Stickstoff oder ein Gemisch daraus sein.

Die Löcher 13, 13', 13", ... und/oder Schlitze 14', 14", ... sind in Längsrichtung 26 so ausgerichtet, dass das Schutzgas 28 in einer Ausströmrichtung 25 ausströmt, wobei die Ausströmrichtung 25 parallel zur Längsrichtung 26 verläuft.

Der Aufsatz 19 auf der Düse 4 weist auf seiner Stirnfläche 31 vorzugsweise kreisförmig angeordnete Löcher 13', 13" (Fig. 2) auf.

Die Löcher 13', 13'', ... und/oder die Schlitze 14', 14", ... sind in radialer Umfangsrichtung auf der Stirnfläche 31 vorzugsweise gleichmäßig verteilt.

Vorzugsweise strömt ein Teil des Schutzgases 28 auch durch zumindest eine Öffnung 16 in den Anteil des inneren Kanals 22 des Aufsatzes 19. Dies dient zur Kühlung des Aufsatzes 19.

Eine Pulverzufuhr 7 ist auch vorhanden und vorzugsweise vor dem Aufsatz 19 angeordnet.

Die Pulverzufuhr 7 kann auch an jeder anderen Stelle der Düse 4 vorhanden sein.

In einer entsprechenden Beschichtungsvorrichtung kann eine Beschichtung mittels des HVOF-Prozesses durchgeführt werden, die kostengünstig ist. Jedoch um bestimmte Rauhigkeiten oder unter einem Winkel von bis zu 45° zur Beschichtungsoberfläche zu beschichten, muss eine APS-Düse (atmosphärisches Plasmaspritzen) verwendet werden, die einen entsprechenden Aufsatz 19 gemäß Figur 1 aufweist. Beide Beschichtungsmöglichkeiten HVOF, APS sind nun vorzugsweise in einer Vorrichtung realisiert.

Auf eine vorhandene Beschichtung, die mittels eines HVOF Prozesses aufgetragen wurde, wird mit einem APS Brenner eine rauere Beschichtung aufgetragen. Nach der HVOF-Beschichtung wird die HVOF-Düse abgebaut und eine APS-Düse 1 in derselben Vorrichtung eingebaut.

Dabei wird an einen APS-Brenner (Düse 4) ein Aufsatz 19 montiert. Durch diesen Aufsatz 19 wird ein Schutzgas 28, wie z. B. Stickstoff, geleitet. Dieses kühlt auch gleichzeitig den Aufsatz 19. Durch das Innere des Aufsatzes 19 strömt das durch das Plasma erwärmte, vorzugsweise metallische Beschichtungsmaterial.

Auch kann die gesamte Schicht mit dem Aufsatz 19 hergestellt werden.

Das Beschichtungsmaterial wird im Plasmastrahl zumindest angeschmolzen und auf ein Substrat aufgetragen. Das Schutzgas 28 wird derartig durch den Aufsatz 19 geleitet, dass sich nach dem Austritt der aufgeschmolzenen Partikel aus der Spritzdüse 1 eine Schutzgasummantelung um den Partikelstrahl bildet.

Dies ist insbesondere wichtig bei metallischem Beschichtungsmaterial, das beim Plasmaspritzen zu stark oxidieren würde, hingegen beim HVOF nicht so stark.

Durch diese Ummantelung wird eine Oxidation der Partikel verhindert. Da die Partikelgeschwindigkeit beim APS wesentlich geringer als beim HVOF ist, bleiben die Partikel besser an der Substratoberfläche haften. Dadurch wird ein Beschichten mit einem Winkel bis zu 45° zur Oberfläche möglich. Die im Vergleich zum HVOF größere Rauheit ist bei diesem Prozess immer gegeben.

Durch die Gestaltung des Aufsatzes 19 kann der Schutzgasmantel beeinflusst werden. Verschiedene Geometrien und Anordnungen der Austrittslöcher 13, 13', 13" oder Schlitze 14', 14'', 14, ... beeinflussen wiederum die Ausbildung und die Geometrie des Schutzgasmantels.

Für die verschiedensten Anwendungsfälle muss nur der Aufsatz 19 getauscht werden. Man kann somit mit einer Düse 4 verschiedenste Aufsatzkonfigurationen 19 und somit Schutzgasmantelkonfiguration testen und bewerten. Wenn der Schutzgasmantel anwendungsbedingt mehr oder weniger verdrallt sein muss, wird nur die Geometrie der Schutzgasaustrittsbohrungen angepasst.

Bei Turbinenschaufeln 120, 130 mit einer komplizierten Geometrie und schlechter Zugänglichkeit zu den zu beschichtenden Bereichen ist diese Art der Beschichtung eine gute und einfache Lösung. Teure Niederdruck- und Vakuum-Anlagen werden überflüssig, da die gleichen Anlagen wie bei der Wärmedämmbeschichtung verwendet werden können. Die so entstehenden Schichten weisen, im Vergleich zu HVOF gespritzten Schichten, eine wesentlich höhere Rauheit und bessere Schichtmorphologie an schwierig erreichbaren Stellen auf. Durch die Variabilität des einfach austauschbaren Aufsatzes 19 kann jeder Anwendungsfall abgedeckt werden. Der Grundkörper 4 verbleibt am Plasmabrenner, wodurch eine aufwändige Montage und Demontage entfällt.

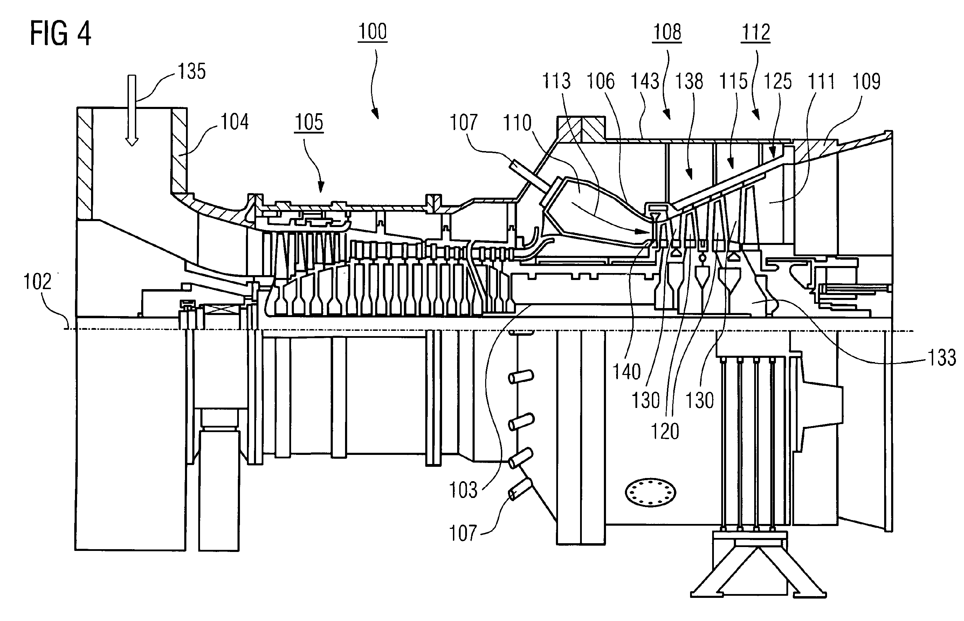

Die Figur 4 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

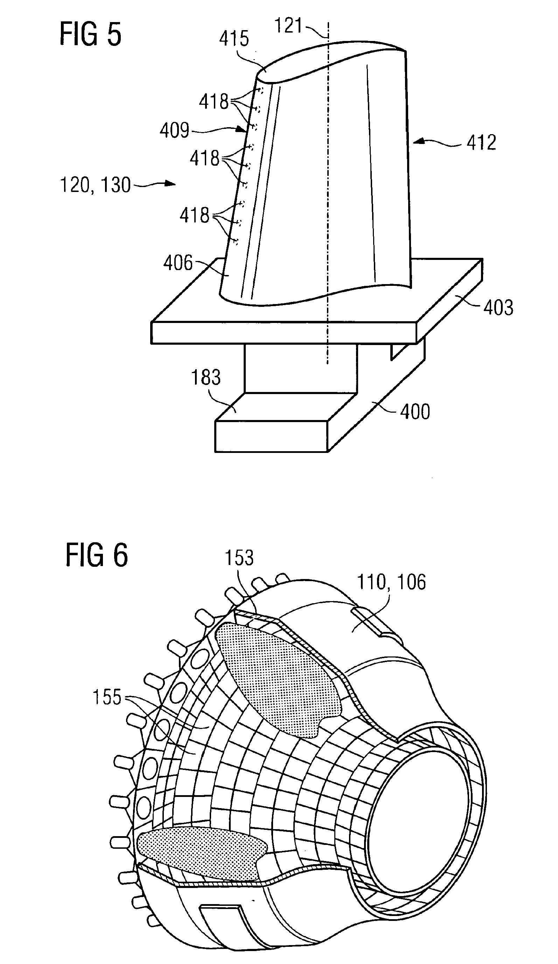

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Spritzdüse (1) zum atmosphärischen Plasmaspritzen,
aus der (1) in einer Ausströmrichtung (25) Beschichtungsmaterial austritt,
bei dem eine Düse (4) an einem axialen Ende einen Aufsatz (19) aufweist,
aus dem (19) in der Ausströmrichtung (25) ein Schutzgas (28) austreten kann.

2. Spritzdüse nach Anspruch 1,
bei dem der Aufsatz (19) für die Düse (4) variiert werden kann.

3. Spritzdüse nach Anspruch 1 oder 2,
bei dem der Aufsatz (19) auf seiner Stirnfläche (31) mehrere Austrittslöcher (13, 13', 13", ...) für das Schutzgas (28) aufweist.

4. Spritzdüse nach Anspruch 1, 2 oder 3,
bei dem der Aufsatz (19) auf seiner Stirnfläche (31) mehrere Schlitze (14', 14", 14"', ...) für das Schutzgas (28) aufweist.

5. Spritzdüse nach Anspruch 1, 2, 3, 4,
bei der an der Düse (4) oder an dem Aufsatz (19) eine Pulverzufuhr (7),
insbesondere vor dem Aufsatz (19),
vorhanden ist.

6. Spritzdüse nach Anspruch 1, 2, 3, 4 oder 5,
bei der ein Teil des Schutzgases (28) durch eine innere Öffnung (10) in einen Innenkanal (22) des Aufsatzes (19) strömen kann.

7. Verfahren zur Beschichtung eines Bauteils (120, 130, 155),
bei dem eine Spritzdüse (1) gemäß Anspruch 1, 2, 3, 4, 5 oder 6 verwendet wird.

8. Verfahren nach Anspruch 7,
bei dem ein Schutzgas (28) beim atmosphärischen Spritzen aus Löchern (13, 13', 13", ...) oder Schlitzen (14', 14", ...) strömt,
das (28) einen gasförmigen Schutzmantel um ein ausströmendes Beschichtungsmaterial bildet.

9. Verfahren nach Anspruch 7 oder 8,
bei dem zuerst eine Düse (4) ohne Aufsatz (19) und dann eine Düse (4) mit dem Aufsatz (19)
verwendet wird.

10. Verfahren zum Beschichten eines Bauteils (120, 130, 155),
bei dem zuerst eine HVOF Beschichtung erfolgt und
dann eine Plasmabeschichtung,
insbesondere mittels APS,
ganz insbesondere mittels einer Spritzdüse (1) gemäß Anspruch 1, 2, 3, 4, 5 oder 6 oder mittels eines Verfahrens nach Anspruch 7, 8 oder 9,
wobei die in derselben Beschichtungsvorrichtung erfolgt.

11. Verfahren nach Anspruch 7, 8, 9 oder 10,
bei dem metallisches Pulver verspritzt wird.

12. Vorrichtung zum Beschichten eines Bauteils (120, 130, 155),
die aufweist:
eine Halterung für das Bauteil (120, 130, 155),
ein Bauteil (120, 130, 155),
einen Roboter,
der eine Spritzdüse (1) gemäß Anspruch 1, 2, 3, 4, 5 oder 6 bewegen kann.

13. Vorrichtung nach Anspruch 12,
die eine HVOF-Düse und
eine Düse zum atmosphärischen Spritzen,
insbesondere eine Spritzdüse (1) gemäß Anspruch 1, 2, 3, 4, 5 oder 6,
aufnehmen kann.

14. Bauteil (120, 130),
insbesondere hergestellt nach Anspruch 7, 8, 9, 10 oder 11, das eine HVOF-Schicht und eine plasmagespritzte Schicht auf der HVOF-Schicht aufweist.
